# EUROPEAN PATENT SPECIFICATION

(11) **EP 4 382 736 B1**
(45) Date of publication and mention of the grant of the patent: **03.09.2025**
(21) Application number: 23214234.9
(22) Date of filing: 05.12.2023
(51) Int. Cl.: F02D 19/06, F02D 19/08, F02D 41/00, F02M 21/02, F02D 41/14

(54) **METHOD OF SUPPLYING AN INTERNAL COMBUSTION PISTON ENGINE WITH GASEOUS FUEL CONTAINING HYDROGEN AND HYDROCARBONS**
VERFAHREN ZUR VERSORGUNG EINER HUBKOLBENBRENNKRAFTMASCHINE MIT WASSERSTOFF UND KOHLENWASSERSTOFFE ENTHALTENDEM GASFÖRMIGEM BRENNSTOFF
PROCÉDÉ D'ALIMENTATION D'UN MOTEUR À COMBUSTION INTERNE À PISTON EN CARBURANT GAZEUX CONTENANT DE L'HYDROGÈNE ET DES HYDROCARBURES

(30) Priority: 05.12.2022 PL 44304822
(43) Date of publication of application: 12.06.2024
(73) Proprietor: Orlen Spolka Akcyjna, 09-411 Plock (PL); Horus-Energia Spolka z ograniczona odpowiedzialnoscia, 05-070 Sulejowek (PL)
(72) Inventor: Mareczek, Michal, 31-581 Kraków (PL)
(74) Representative: Kondrat, Mariusz

(56) References cited:
- EP-B1- 3 417 164
- WO-A1-2010/116064
- JP-A- H08 144 860

## Description

The subject of the application is a method of supplying an internal combustion piston engine with gaseous fuel containing hydrogen and hydrocarbons based on a mixer and gas injection system.

Document CA2630927C discloses a multi-fuel and co-injection system and method for supplying internal combustion and turbine engines, wherein various combinations of fuels, both liquid and gaseous, can be mixed together and supply into the system, under the real-time control of a microprocessor responding to various sensors and acting on various control devices, all working together in a manner intended to increase the use of the thermal content of the different fuels and, in particular, to increase combustion efficiency and power output while reducing fuel consumption, both in terms of quantity and cost, and wherein the liquid fuel lubricates the moving parts of the injection system. It uses two fuel sources, which provide a first and a second fuel selected from a group consisting of diesel fuel, propane, oxygen, hydrogen, hydroxide, biodiesel, vegetable oil, motor oil, natural gas and methane, wherein the first and second fuels are different.

Document WO2010116064 discloses a multicylinder internal combustion engine comprising air intake means, fuel supply means, exhaust outlet means for the combustion gases produced by the cylinders, wherein said engine comprises a first cylinder capable of operating on a rich mixture to produce hydrogen-containing combustion gases and a circuit for recirculating the combustion gases from the first cylinder towards the air intake means. The feeding means are provided to supply at least the first cylinder with secondary hydrocarbon fuel or a mixture of hydrocarbons having 1 to 4 carbon atoms, and to supply at least the remaining cylinders with a primary fuel different from the secondary fuel.

Document US2004261762 discloses a homogeneous charge compression ignition engine (HCCI) vehicle comprising a fuel source that provides a hydrocarbon fuel as a first quantity and an acetylene source that provides an acetylene component as a second quantity. The cylinder contains a reciprocally driven piston. The cylinder receives a combustion mixture containing a third amount of air, a first amount of hydrocarbon fuel and a second amount of the acetylene component. The piston compresses the combustion mixture to cause self-ignition of the combustion mixture. The acetylene component comprising one of acetylene, a mixture of acetylene and hydrogen and a mixture of acetylene, hydrogen and other products of the acetylene production process.

There are no known solutions that allow simultaneous supply of gaseous fuel using an injection system and a mixing system.

Advantageously, the hydrocarbons are selected from gaseous hydrocarbons, in particular such as methane, ethane, propane, butane and mixtures thereof.

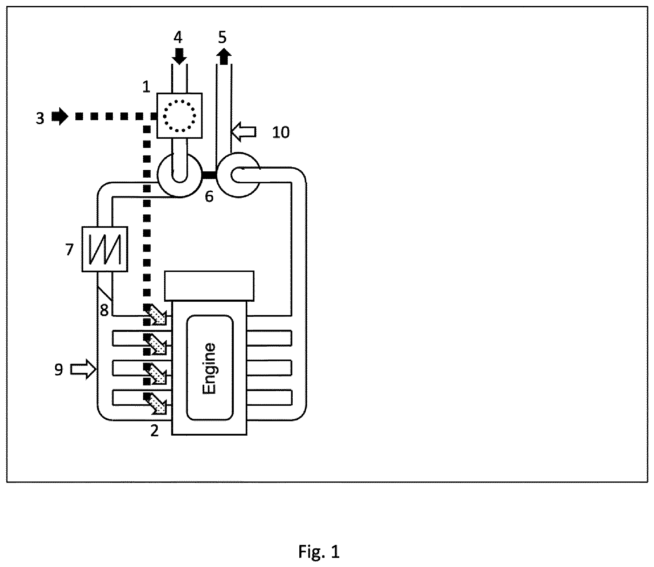

The following shows an embodiment of the invention
The claimed method of supply is based on a functional combination of a mixing system and an injection system in the engine intake system. Fig. 1 shows a general diagram of an example implementation of the solution. In this diagram, the individual designations refer to the following engine components:
1 - Mixer
2 - Gas injection system
3 - Gaseous fuel delivery system
4 - Intake air
5 - Exhaust gas
6 - Turbocharger
7 - Intercooler
8 - Power throttle
9 - O2, H2, CH4 measurement system
10 - Lambda sensor

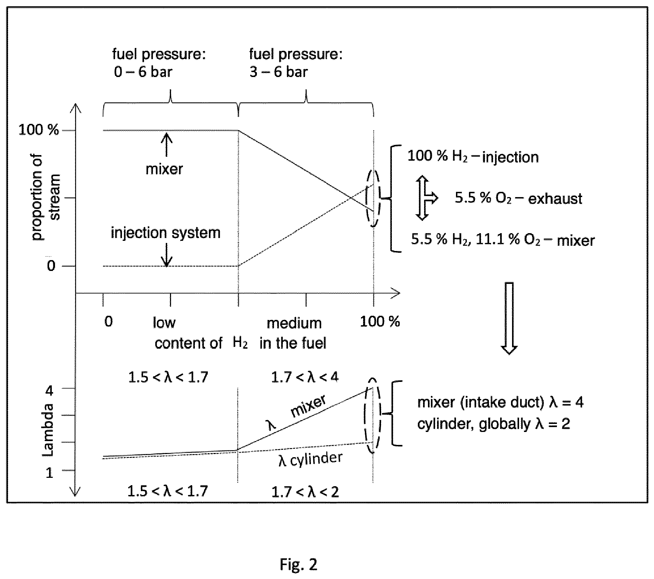

Fuel is supplied to the cylinders simultaneously via two routes, the intake manifold collecting duct, via a mixer, and directly before the intake valve of each cylinder, via an injector. The proportion of stream shares depends on the fuel pressure and the relative proportions of methane and hydrogen. Fig. 2 shows a graphical representation of the distribution of fuel between the mentioned systems.

In the diagram shown in Fig. 2, three ranges can be identified for the proportion of hydrogen in the CH4/H2 fuel - low, medium and full proportion. In the low proportion area, where the hydrogen concentration does not exceed 50 %, the fuel is supplied only by the mixer. This provides the possibility of supplying from a low-pressure system, where a pressure of less than 10 kPa (100 mbar) will be entirely sufficient. In this range, the air/fuel ratio is between 1.5 and 1.7 λ, depending on the hydrogen concentration and engine load. Above a 50% hydrogen concentration in the fuel (medium proportion), the air concentration of the air/fuel mixture in the main mixture flowing from the mixer changes, reaching λ = 4 for pure hydrogen (full proportion). The remaining part of the fuel is supplied by the injection system, to the extent that the global charge composition in the cylinder is λ = 2. In the proportion of hydrogen above 50 %, when the injection system starts to operate, a fuel pressure above the turbocharger mixture charge pressure is required.

With a high hydrogen concentration in the fuel, there is a risk of self-ignition of the mixture in the intake system due to residual exhaust gas in the cylinder or a heated engine component. The possible self-ignition of a high-pressure mixture across the engine intake duct comprising the intercooler, throttle, compressor and mixer could lead to serious engine failure. The use of injection limits self-ignition to the area covered by the mixture supplied to a specific cylinder, i.e. the area around the intake valve. The relatively small amount of energy, is not dangerous for the intake system, and in addition, in the engine control system, such an event is registered and the dose of a specific cylinder is automatically corrected.

The presented solution takes advantage of the fact that there is a significant drop in the energy required for self-ignition of the hydrogen-air mixture at an excess air ratio λ of approximately 4 (5.5 % H2).

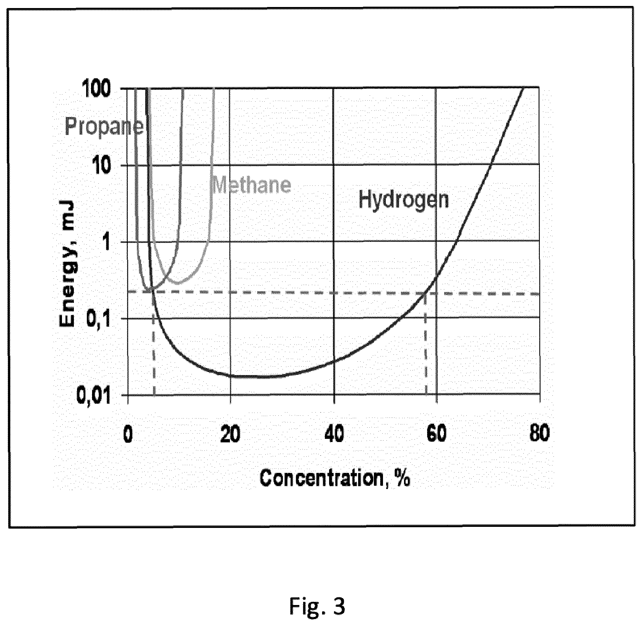

Fig. 3 shows the dependence of the minimum ignition spark energy required to initiate combustion of the mixture depending on the hydrogen concentration in the air. In the case of a stoichiometric composition, this energy is more than 10 times lower than for a stoichiometric methane mixture. With a hydrogen concentration of around 5 % in the hydrogen-air mixture, i.e. at the ignition limit, the required energy increases rapidly, also reducing the risk of self-ignition.

The mixture supplied through the common intake manifold, at the ignition limit, does not present any risk of self-ignition. However, in order to obtain high specific power from the cylinder, additional fuel supply is required and this is achieved by means of an injector. Since there is always a combustible mixture in the cylinder, the injection process of the additional fuel dose itself can be carried out at a late stage of the intake stroke. The certainty of ignition of such a mixture is maintained in this situation, and a high degree of safety is held.

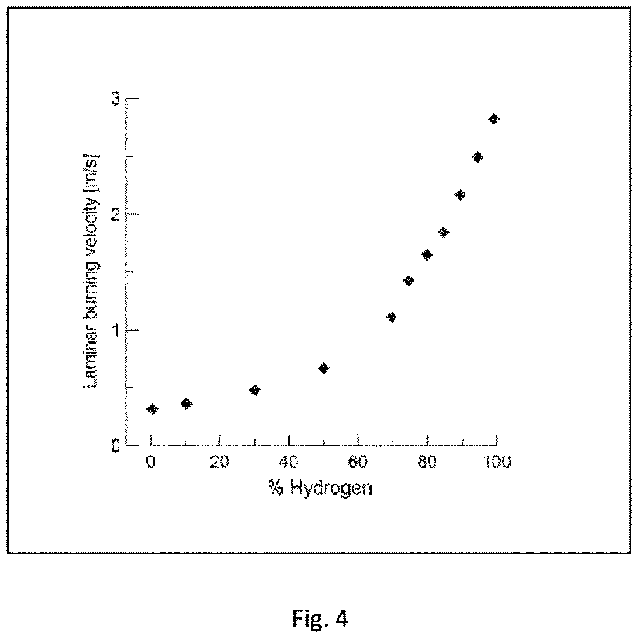

The need for caution when supplying hydrogen intensifies with its content in the CH4/H2 mixture. Fig. 4. illustrates a graph showing the speed of flame propagation in the CH4/H2 mixture as a function of hydrogen concentration. The speed of flame propagation for a fuel-air mixture for pure hydrogen is about 10 times greater than for pure methane. From the graph, it can be seen that for proportions up to about 50 - 60 % H2, such a mixture takes on more of the characteristics of methane, while above, there is a clear predominance of hydrogen characteristics. This provides a basis for assuming that up to a 50% hydrogen content in the CH4/H2 mixture, safe engine operation will be ensured with a mixture-only supply. A mixture supply has the advantage that it is possible to supply the engine with low-pressure fuel.

In summary, the claimed solution has the following innovative features
1) It provides the engine with the ability to run on a gaseous fuel containing hydrocarbons and hydrogen in practically any mixture of the both components;
2) Full engine parameters can be achieved when running on gas at atmospheric pressure, with a hydrogen concentration of up to approximately 50% in the hydrocarbon-hydrogen mixture;
3) Because of the mixer-injection system for supplying gaseous fuel, the required hydrogen pressure may be lower than in an equivalent injection system at high hydrogen concentrations in the fuel;
4) It uniquely enables the simultaneous supply to the cylinder from both the injection system and the mixing system, thus allowing an optimum distribution of the fuel stream in the intake phase, enabling high engine performance and a high level of safety.

## Claims

1. A method of supplying an internal combustion piston engine comprising a turbocharger, a mixer and a gas injection system with gaseous fuel containing hydrogen and hydrocarbons, **characterized in that:**
1) If the hydrogen concentration of the gaseous fuel is less than 50 %, the gaseous fuel is supplied only by the mixer, allowing feeding from a low-pressure system where a pressure of less than 10 kPa (100 mbar) will be sufficient, in this range the air/fuel ratio is between 1.5 and 1.7 λ, depending on the hydrogen concentration and the engine load,
2) if the hydrogen concentration of the gaseous fuel is greater than 50 % of the hydrogen in the fuel (average proportion), for air/fuel ratios between 1.7 < Lambda < 2, the gaseous fuel is supplied by the mixer and the gas injection system and the air concentration of the air-fuel mixture change reaching Lambda λ = 4 for pure hydrogen,
3) if pure hydrogen is supplied to the mixer, the air/fuel mixture in the main mixture flowing from the mixer is Lambda = 4 and the remaining portion of the gaseous fuel is supplied by the injection system, to the extent that the global charge composition of the fuel-air mixture in the cylinder has an air/fuel ratio of λ = 2, wherein, in the range of hydrogen concentration above 50 %, when the injection system starts to operate, it is required to provide a fuel pressure higher than the mixture charge pressure of the turbocharger.

2. A method according to claim 1, **characterized in that** the hydrocarbons are selected from gaseous hydrocarbons, in particular such as methane, ethane, propane, butane and mixtures thereof.

## Patentansprüche

1. Verfahren zum Versorgen eines Verbrennungsmotors mit Kolben, der einen Turbolader, einen Mischer und ein Gasinjektionssystem umfasst, mit gasförmigem Brennstoff, der Wasserstoff und Kohlenwasserstoffe enthält, **dadurch gekennzeichnet, dass:**
1) Wenn die Wasserstoffkonzentration des gasförmigen Brennstoffs weniger als 50 % beträgt, wird der gasförmige Brennstoff nur über den Mischer zugeführt, wodurch eine Zufuhr aus einem Niederdrucksystem möglich ist, in dem ein Druck von weniger als 10 kPa (100 mbar) ausreichend ist, wobei in diesem Bereich
das Luft-Kraftstoff-Verhältnis zwischen 1,5 und 1,7 λ liegt, abhängig von der Wasserstoffkonzentration und der Motorlast,
2) wenn die Wasserstoffkonzentration des gasförmigen Brennstoffs größer als 50 % des Wasserstoffs im Brennstoff (durchschnittlicher Anteil) ist, für Luft/Brennstoff-Verhältnisse zwischen 1,7 <
Lambda < 2 wird der gasförmige Kraftstoff über den
Mischer und dem Gas-Einspritzsystem zugeführt und die Luftkonzentration des Luft-Kraftstoff-Gemisches
und erreicht Lambda λ = 4 für reinen Wasserstoff,
3) wird dem Mischer reiner Wasserstoff zugeführt, ist das Luft-Kraftstoff-Gemisch im Hauptgemisch, das aus dem Mischer strömt, Lambda = 4 und der restliche Anteil des gasförmigen wird vom Einspritzsystem zugeführt, bis die Gesamtzusammensetzung des Kraftstoff-Luft-Gemisches im Zylinder ein Luft-Kraftstoff-Verhältnis von λ = 2,
wobei im Bereich einer Wasserstoffkonzentration über 50 %, wenn das Einspritzsystem zu arbeiten beginnt, ein Kraftstoffdruck bereitgestellt werden muss, der höher ist als der Gemischladungsdruck des Turboladers.

2. Verfahren nach Anspruch 1, **dadurch gekennzeichnet, dass** die Kohlenwasserstoffe aus gasförmigen Kohlenwasserstoffen ausgewählt sind, insbesondere aus Methan, Ethan, Propan, Butan und Mischungen davon.

## Revendications

1. Procédé d'alimentation d'un moteur à pistons à combustion interne comprenant un turbocompresseur, un mélangeur et un système d'injection de gaz avec un combustible gazeux contenant de l'hydrogène et des hydrocarbures, **caractérisé en ce que** :
1) Si la concentration en hydrogène du combustible gazeux est inférieure à 50 %, le combustible gazeux est alimenté uniquement par le mélangeur, ce qui permet une alimentation à partir d'un système à basse pression où une pression inférieure à 10 kPa (100 mbar) est suffisante, dans cette plage
le rapport air/carburant est compris entre 1,5 et 1,7 λ, en fonction de la concentration en hydrogène et de la charge du moteur,
2) si la concentration en hydrogène du combustible gazeux est supérieure à 50 % de l'hydrogène dans le combustible (proportion moyenne), pour des rapports air/combustible compris entre 1,7 <
Lambda < 2, le combustible gazeux est alimenté par le
mélangeur et le système d'injection de gaz et la concentration en air du mélange air-carburant varie
pour atteindre Lambda λ = 4 pour l'hydrogène pur,
3) si de l'hydrogène pur est fourni au mélangeur, le mélange air/carburant dans le mélange principal s'écoulant du mélangeur est Lambda = 4 et la partie restante du carburant gazeux est fournie par le système d'injection, de sorte que la composition globale de la charge du mélange carburant-air dans le cylindre a un rapport air/carburant de λ = 2,
où, dans la plage de concentration en hydrogène supérieure à 50 %, lorsque le système d'injection commence à fonctionner, il est nécessaire de fournir une pression de carburant supérieure à la pression de charge du mélange du turbocompresseur.

2. Procédé selon la revendication 1, **caractérisé en ce que** les hydrocarbures sont choisis parmi les hydrocarbures gazeux, en particulier tels que le méthane, l'éthane, le propane, le butane et leurs mélanges.
